# EUROPEAN PATENT APPLICATION

(11) **EP 2 980 018 A1**
(43) Date of publication of application: **03.02.2016**
(21) Application number: 14179561.7
(22) Date of filing: 01.08.2014
(51) Int. Cl.: C01B 33/02, C03C 4/12, C09K 11/02

(54) **Silicon nanocrystals with functional surfaces**

(71) Applicant: Technische Universität München, 80333 München (DE)
(72) Inventor: Rieger, Bernhard, 89275 Oberelchingen (DE); Kehrle, Julian, 89335 Ichenhausen (DE); Höhlein, Ignaz, 81541 München (DE)
(74) Representative: Hoefer & Partner Patentanwälte mbB

(57) **Abstract**

Functionalized silicon nanocrystals, a method for their preparation and uses thereof are described.

## Description

The present invention is concerned with silicon nanoparticles with a silane surface, a method for their production and the use of those nanoparticles.

In the last years nanocrystals made of semiconductor materials, also called quantum dots (QD) have become more and more important because of their superior optoelectronic properties. Nanocrystals with a diameter of a few nanometers can be produced from semiconductor materials like CdSe and GaAs, but also from silicon. Silicon is a material of high interest in many fields, as it is easily and abundantly available, is non-toxic and has semiconductor properties, but also superior optoelectronic properties and allows to avoid the use of expensive and harmful heavy metals.

Absorption and emission characteristics of nanocrystals are dependent on the particle diameter and, thus, it is possible to adapt photoluminescence over the whole spectrum of visible light from blue to infrared. Nanomaterials have further advantages like high resistance against photo bleaching and provide a high quantum yield. Quantum dots are useful for a variety of applications like solar cells, LEDs and as fluorescence markers for medicinal uses and for sensors. Silicon quantum dots are particularly useful as they are made from easily available material.

Methods for producing silicon nanocrystals (SiNC) are known. For example, Cheng X. et al. (Chem. Soc. Rev. 2014, April 21; 43 (8): 2680-700, DOI: 10.1039/c3cs60353a) and J.G. Veinot (Chem. Comm. 2006, July 25, 4160 - 4168) describe preparation and modification of silicon containing quantum dots. In the last years significant progress has been made in the understanding of physics and surface properties of silicon nanocrystals. This has led to an understanding of preparation and characterization of surface passivated colloidal silicon nanocrystals. Moreover, the synthesis of halogen-terminated SiNC has been described. However, these SiNCs have no or only blue photoluminescence with mainly low quantum yield.

SiNCs with terminal hydride groups have been described but those are sensitive to oxidation and are difficult to disperse in organic solvents. To overcome these problems it has been proposed to introduce organic groups on the surface of SiNCs. Hydrosilylation of alkenes and alkynes is the method that is mostly used to functionalize the surface, as it creates a stable Si-C bond and allows to introduce different functional groups.

Hydrosilylation can produce a reactive surface which allows the introduction of further reactive groups as has been shown by Shiohara et al. who used 1,5-hexadiene functionalized SiNCs which could be further reacted via epoxidation and dihydroxylation (Shiohara et al., J. Am. Chem. Soc. 2010, 132, 248-53).

Barabash R.N. et al., Ukr. Chim. Z. 2006, 72, 78-84 disclose hydrosilylation of porous silicon with vinyl silanes having hydrolysable groups like vinyl trichlorosilane and vinyl trimethoxysilane. Porous silicon with high hydrophilicity was obtained that rapidly corroded through interaction with water vapor from ambient air.

Photoluminescent silicon products were known for example in the form of porous silicon, which is a combination of amorphous and crystalline silicon, and silicon nanoparticles. Silicon nanoparticles have a high number of hydrogen atoms on the surface which are prone to oxidation, therefore it has been proposed to modify the surface of silicon nanoparticles. Li X. et al., Langmuir, 20(11), 2004, 4720-4727 describe surface functionalization of silicon nanoparticles wherein either alkyl monolayers are added on hydrogen-terminated silicon or the particles were reacted with alkoxy silanes to provide Si-O-Si bonds. Silicon particles functionalized via Si-O-Si bonds can be sensitive to basic hydrolysis, and can undergo a shift of wavelength. Moreover, Li et al. describe the protection of silicon nanoparticles by functionalization with octadecene. Surface alkylation is done to stabilize the particles in non-polar solvents. However, no further functionalization is possible, as no reactive groups are available.

Hua et al. (Langmuir 2005, 21, 6054-6062) describe surface grafting of luminescent silicon quantum dots by photo-initiated hydrosilylation. By dense grafting of an organic monolayer onto the silicon nanoparticles chemical and physical properties of the particles are changed to form stable dispersions. Hua et al. on the one hand teach to protect particles from a chemical attack by dense grafting of alkyl groups. On the other hand it is described to attach hydrolysable groups which generate alcohol and carboxylic acid functional groups. The latter products are proposed for use in assembling nanoscale hybrid inorganic/organic semiconductor devices, whereas the former products are described for orange luminescent particles.

Hua et al. also disclose that the particles having a grafted organic monolayer can only partially protect the particle against quenching by amines, although no complete quenching is observed. Fluorescence can be recovered upon addition of trifluoro acetic acid.

It was known to modify the surface of porous silicon with different functional groups and several strategies have been used for this purpose. Properties of porous silicon or silicon wafers, however, are different from the properties of free nanoparticles as processes on a bulk surface differ from those with nanosized silicon nanocrystals.

It was an object of the present invention to provide stable photo-luminescent nanocrystals, a method for surface functionalization of silicon nanocrystals as well as different applications of the particles.

A further object of the present invention was to provide photoluminescent particles that can be used for functionalizing surfaces like glass surfaces, silicone surfaces, silica powder, silica gels and other polymers to introduce photoluminescence of a predetermined wavelength. It was a further object of the present invention to provide photo-luminescent silicon nanocrystal conjugates, which can be reacted with different types of substrates, are stable, maintain their photoluminescence after functionalisation, do not undergo essential wavelength shift, can be used in aqueous solvents and can be stored in aqueous solvents or air without losing their photoluminescence.

The present invention provides silicon nanocrystals with functionalized surface which provide functional groups for different applications. It has been found that silicon nanocrystals can be functionalized with silanes and thereby maintain photoluminescence and all advantages of silicon nanocrystals. The silicon nanocrystals of the present invention are stable against water and air, although they can carry reactive funtions that can be activated purposively by water for reactions like aggregation of particles. Because of these advantages, the functional layer of the present invention is superior to functionalisation as proposed in the prior art.

The present invention provides silicon particles that can react with reactive surfaces and thereby provides new and innovative products, such as photoluminescent glass, photoluminescent films, and photoluminescent gels.

One aspect of the present invention is the provision of functionalized silicon nanocrystal conjugates of formula (I)

SiNC-(L-(SiXₐY_{b}Z_{c}))ₙ

wherein SiNC is a silicon nanocrystal,
L is a linker having a length of 2 to 50 atoms,
X is a reactive and/or hydrolysable group,
Y is an organic group,
Z is -R¹R²C=CR³R⁴, -R¹C=CR⁵ or -R¹R⁶₂C-CR⁷₂-SiNC, wherein R¹ is a bond or alkyl having 1 to 50 carbon atoms, and R², R³, R⁴, R⁵, R⁶, R⁷ each are independently hydrogen, alkyl having 1 to 12 carbon atoms, or SiNC, wherein preferably Z is -R'CH=CHR", -R'C≡CR" or -R'-CH₂-CH₂-SiNC, wherein R' is a bond or alkyl having 1 to 50 carbon atoms, and R" is hydrogen, or alkyl having 1 to 6 carbon atoms, or SiNC,
a is an integer of 0 to 3, b is an integer of 0 to 3, c is an integer of 0 to 3, a + b + c is 3, and n is an integer of 1 or more.

Thus, the conjugates of the present invention are comprised of at least one silicon nanocrystal on the one hand and at least one silane-derived group on the other hand. The number of silane-derived groups that is bonded to the silicon nanocrystal depends on the size of the nanocrystal, on the purpose and the type of silane-derived group. The number of silane-derived groups bonded to the nanocrystal preferably is such, that no or essentially no H-atoms remain on the surface or are available for reactions, respectively. At least one silane derived group is bound and the number can be up to 10000 or more, and can be in a range of 5 to 500, or 10 to 250 or any other integer.

The reactive or hydrolysable group X provides for reaction with other functional groups, for cross-linking or for attaching the conjugate to a surface. The organic group Y is a neutral group, i.e. a group that does not react with other functional groups, can provide protection of the core and can also provide for stabilizing or steric effects. The group Z provides either an unsaturated group that can undergo hydrosilylation or provides a group for attachment of another SiNC that has been bonded via hydrosilylation. The silane-derived group can have up to three reactive and/or hydrolysable groups, up to three hydrosilylizable or hydrosilylised groups and/or up to three neutral groups.

Silicon nanocrystals that are used for the present invention are particles having a size between 1 and 1000 nm, preferably 2 to 500 nm, more preferred 2 to 10 nm. Silicon nanocrystals are known in the art and can be obtained with methods known to the skilled person. The size of the silicon nanocrystals can be determined using dynamic light scattering as is known in the art. Typical particles used according to the present invention have hydrodynamic radii in the range of about 1 to about 20, such as about 2 to about 12, in particular about 3 to about 6 nm.

In a preferred embodiment the silicon nanocrystal is obtained as described below by pyrolysis of hydrogen silsesquioxane and bleaching with hydrohalogenide, preferably hydrogen fluoride. In general, silicon nanocrystals have terminal hydrogen atoms on the surface. These hydrogen atoms provide for the reactive sites of the molecule and thereby for instability because they can be oxidized. The conjugates of the present invention may still have terminal hydrogen atoms on the nanocrystal but those are protected or shielded by the silane derived layer, in particular the neutral groups of the silanes.

The conjugate carries silane-derived groups which are bonded to the crystal via a linker L. L is a unit which provides for the bond between the silane-derived group and the particle and can be any unit that is useful for this purpose. For optimal results the linker should not be reactive, have no detrimental effects on the luminescent properties and have a length such that the silane-derived group has an optimal distance to the nanocrystal. The linker can comprise atoms like C, N, S, O, but in a preferred embodiment, the linker is an alkyl group which can be linear or branched. The linker can have a length of up to 50 atoms or more. It has been found that it is useful to have a linker with a length of up to 20, or up to 12 atoms, in particular a saturated or unsaturated C₂-C₁₈ alkyl, more preferred a saturated C₂-C₁₂ alkyl. In general, the linker shall have a length such that the reactive groups of the silane-derived unit are presented for reaction in an optimal manner but that at the same time the surface of the nanocrystal is protected. The skilled person can find the most suitable length with routine tests. A length of the linker of 2 to 5 carbon atoms, such as 2 or 3 carbon atoms is particularly useful. The linker is derived from a functional group which was used for bonding the silane-derived group to the silicon nanocrystal. In a preferred embodiment this bonding is obtained by using an α,β-unsaturated group like vinyl, allyl, butenyl or acetylene. Therefore, the linker in the most preferred embodiment is ethylene, ethenylene, propylene, or butylene.

The silane-derived group is comprised of a silicon atom which (apart from the linker) carries three groups, i.e. X, Y, and/or Z. The groups can be the same or different, for example it can be up to three groups X, up to three groups Y and up to three groups Z. Preferably at least one and up to three groups are X, 0 to 2 are Y and 0 to 2 are Z.

X is a reactive and/or hydrolysable group which provides for further reaction of the conjugate, such as the addition of further functional groups or for cross-linking. Y is an organic group, which is inert, i.e. does not react under normal conditions and can sterically stabilize the unit. Z can be a mono-unsaturated, preferably α,β-unsaturated group that provides for the attachment to a further silicon nanocrystal or is available for addition reactions, or can be a further SiNC bound via hydrosilylation.

The group X can be selected according to the function that should be introduced. It can be any group that provides a reactive site or that can be hydrolysed under conditions that do not damage the SiNCs. In one embodiment at least one group X is a hydrolysable group, for example a halogen, such as F, Cl, Br, or I, a triflate or sulfonate, or an organoxy (R-O-) or acyloxy (R-C(O)O-) group, wherein R is hydrogen, a saturated or unsaturated linear, branched, or cyclic alkyl group having 1 to 20 carbon atoms or an aryl group having 6 to 20 carbon atoms, such as phenyl, benzyl or naphthyl, or wherein R is a bond. Examples for a hydrolysable group are methoxy, ethoxy, and acetoxy. Examples for a reactive group are amine, amide, hydroxyl, carboxyl, carbonyl, sulfoxide etc. One silane-derived group can carry up to three,groups X, and in embodiments where functionality shall be provided one, two or three groups X. The number of groups X depends on the number of reactive sites that is desired, on the purpose and on the type of reactive group.

Y is an organic group that is bonded to the silicon atom via an Si-C-bond. This provides for a stable bond that is not hydrolyzed under normal conditions. Group Y is a "neutral" group, i.e. a group that does not undergo a reaction with other functionalized silicon nanocrystal conjugates or with other functional groups in further reactions. Y can be used to stabilize the molecule, to saturate bonds and/or to provide steric effects. Y preferably is an organic group that is comprised of carbon and hydrogen atoms, such as a C₁-C₂₀ alkyl or C₆-C₂₀ aryl, such as methyl, ethyl, phenyl and benzyl.

The silane-derived unit can furthermore carry up to three, for example one, two or three groups Z, Z can be -R¹R²C=CR³R⁴, -R¹C≡CR⁵ or -R¹R⁶₂C-CR⁷₂-SiNC, wherein R¹ is a bond or alkyl having 1 to 50 carbon atoms, and R², R³, R⁴, R⁵, R⁶, R⁷ each are independently hydrogen, alkyl having 1 to 12 carbon atoms, or SiNC, wherein preferably Z is -R'CH=CHR", -R'C≡CR" or -R'-CH₂-CH₂-SiNC, wherein R' is a bond or alkyl having 1 to 50 carbon atoms, and R" is hydrogen, or alkyl having 1 to 6 carbon atoms, or SiNC. In other words, Z can be either hydrosilylizable or hydrosilylized, i.e. provides an unsaturated group for a hydrosilysation or other addition reaction or has undergone hydrosilylation and, thus carries at least one further silicon nanocrystal bonded via Si-(C)ₓ-Si. The mono-unsaturated group of Z, which in one embodiment is an α,β-unsaturated group, can provide for cross-linking with unsaturated groups bonded to other silicon nanocrystal conjugates or to other molecules or for other addition reactions. The unsaturated alkyl group can have one double or triple bond between any two carbon atoms of the alkyl group, for example between the first two carbon atoms. The alkyl group can in total (including the two carbon atoms of the unsaturated bond) have 2 to 52 carbon atoms, alkyl groups having a length of 2 to 12 carbon atoms are well-suited. Preferably, R' is a bond or an alkyl group having 1 to 5 carbon atoms, R", R², R³, R⁴, R⁵, R⁶, R⁷ are preferably each independently hydrogen or C₁-C₃.

If two or three groups of one category are used, those can be the same or can be different. For example the silane derived group can comprise two or three groups X, Y or Z and those can be the same or different. In one embodiment, the silane-derived group comprises three units X which are all organoxy groups. These groups can then be cross-linked with the hydroxyl groups on a substrate like a polysiloxane.

In another embodiment wherein the silane-derived group comprises two or three X units, one or two units can provide a hydrolysable group, whereas two or one units, respectively, can provide a reactive group.

Conjugates that carry different types of reactive and/or hydrolyzable groups can be reacted in steps, first with a first type of substrate, wherein for example alkoxy groups react with hydroxyl groups, and in a second or further step with other type of substrate or reactive sites, wherein for example free radical addition occurs via unsaturated groups or crosslinking via reaction of reactive sites on different SiNC conjugates.

The conjugates of the present invention combine reactive versatility with stable photoluminescence and allow to use SiNCs in many different applications and for many different purposes. It is assumed that the silane derived layer provides for protection of the SiNC, for reactivity and does not disturb the optical properties.

The conjugates of the present invention can be obtained by reacting silicon nanocrystals having at least one terminal hydrogen atom at the surface with at least one silane of formula (II) SiₐY_{b}Z'_{c}, wherein X and Y are as defined above, Z' can be -R¹R²C=CR³R⁴, -R¹C≡CR⁵ or -R¹R⁶₂C-CR⁷₂-SiNC, wherein R¹ is a bond or alkyl having 1 to 50 carbon atoms, and R², R³, R⁴, R⁵, R⁶, R⁷ each are independently hydrogen, alkyl having 1 to 12 carbon atoms, or SiNC, wherein preferably Z' is -R'CH=CHR", -R'C≡CR" or -R'-CH₂-CH₂-SiNC, wherein R' is a bond or alkyl having 2 to 50, and R" is hydrogen, alkyl having 1 to 6 carbon atoms, or SiNC, and a is an integer of 0 to 3, b is an integer of 0 to 3, c is an integer of 1 to 3 and a + b + c is 4. The reaction is carried out under free radical addition favoring conditions or by an exciton mediated mechanism.

Silicon nanocrystals can be obtained as is known to the skilled person. In a preferred embodiment, the silicon nanocrystals are obtained by pyrolysis of hydrogen silsesquioxane and thereafter are etched with a hydrogen halogenide, in particular hydrogen fluoride. With the known methods it is possible to obtain silicon nanocrystals with a size in the range of 1 to 1000 nm, preferably 2 to 10 nm. The size can be determined as is known in the art, for example by dynamic light scattering. Dynamic light scattering provides the size as radius of a particle including hydration sphere if present.

The silicon nanocrystals are reacted with silanes of formula (II) which comprise at least one unsaturated group Z, for example an α,ß-double or triple bond, for a hydrosilylation reaction with H atoms on the SiNC and, thus, yield silane derived groups bonded via Si-C-bonds.

The hydrosilylation of the crystals is a free radical reaction and can be initiated thermally, by using catalysts, such as Karstedt catalyst - platinum(O)-1,3-divinyl-1,1,3,3-tetramethyldisiloxane, or Speier catalysat - H₂PtCl₆) radical starters or UV or exciton mediated.

In a preferred embodiment of the method of the present invention, hydrosilylation is initiated by UV.

For the hydrosilylation reaction the reactants are in liquid or solubilized form. When the silane(s) that are used for the reaction are in liquid form at the reaction temperature (room temperature of about 20 to 25°C) no solvent is necessary. If solid silanes are used, a suitable solvent is used to dissolve the silane. Solvents that are able to dissolve silanes are known, toluene or tetrahydrofurane being examples.

In a preferred embodiment the silicon nanocrystals are etched with a hydrogen halogenide, such as hydrogen fluoride to provide a high density of hydrogen atoms on the surface of the crystal. The hydrogen atoms react with the silane and, thereby, the surface of the nanocrystal is passivated without, however, influencing the photoluminescence of the particle.

By reacting the silicon nanocrystals with at least one silane as defined above, silane units are covalently bonded to the nanocrystal via an Si-C-bond which is stable against hydrolyzation and oxidation. The silane furthermore provides at least one and up to three reactive groups that can be used for providing photoluminescence to substrates like polysiloxanes, gels, glass surfaces, silica particles and so on. The photoluminescent properties of the derivatized silicon nanocrystals are very favorable, they are stable, the luminescence is higher than that of fluorescence dyes and due to the reactive groups on the surface they can be used as markers in biological structures such as tissues. Preferred silanes for reaction with the silicon nanocrystals are silanes carrying at least one vinyl group. The hydrosilylation reaction between vinyl and silicon hydrides results in a short linker (two carbon atoms) which allows a dense protective layer around the nanocrystal. This dense layer protects the crystal against oxidation.

Preferred reactive or hydrolysable groups are halogens and alkoxy groups. Examples for suitable silanes are vinyldimethoxysilane, vinyldimethylchlorosilane and vinyltriethoxysilane.

The photoluminenscent silicon nanocrystal conjugates of the present invention are versatile and can be used for many purposes. Because of the many options for reactive groups that can be bound to SiNCs, photoluminescence can be provided to many substrates, in particular silicon containing substrates such as glass, polysiloxanes, sil-gels, rubbers, and to biological substrates such as tissues and cells.

Photoluminscence can be provided to substrates that have available reactive groups that can react with one of the reactive sites of the conjugates of the present invention. Furthermore, via further or other functional groups aggregates or crosslinked matrices can be created.

In one embodiment a ligand, such as a specifically binding group like avidin or biotin, an antigen or an antibody, a receptor etc., can be attached to a photoluminescent SiNC via a hydrolysable or reactive or unsaturated unit provided on the particle and can be used as marker for a reaction. As the particles of the present invention allow to provide different groups, different with regard to binding properties, to reactivity, etc., conjugates for a multiplicity of uses can be created.

In one embodiment a photoluminescent silicon nanocrystal gel can be prepared by reacting silicon nanocrystal conjugates comprising at least one alkoxy group dissolved in a solvent with an acidic reagent under conditions that allow reaction of the hydrolyzed groups. Optionally, by adding a crosslinker that comprises at least two reactive groups, a crosslinked substrate can be obtained. Suitable for such products are for example conjugates carrying two or three alkoxy groups, such as ethoxy groups.

A photoluminescent siloxane matrix with embedded SiNCs of the present invention can be prepared by treating siloxane to provide reactive OH groups and reacting the activated siloxane with SiNCs having activated OH groups on the surface via functionalisation.

In another embodiment photoluminescent silica particles are prepared by reacting silica particles having an average diameter of about 50 to about 150 nm, solubilized in a solvent, with silicon nanocrystal conjugates carrying at least one alkoxy group on the surface.

Furthermore, photoluminescent glass can be prepared by treating a glass surface with acid to provide hydroxy groups and then reacting the activated glass surface with a silicon crystal conjugate carrying at least one hydrolysable group, such as a halogen or alkoxy group under conditions that allow reaction between hydroxy groups on the glass surface with hydrolyzed silicon nanocrystal conjugates.

The following examples illustrate the conjugates of the present invention and their use for derivatizing silicon containing products.

The subject-matter of the present invention is further explained in the following examples and figures.
Fig. 1 shows an ATR-IR spectrum of SiNC-VDMMEOS.
Fig. 2 shows an ATR-IR spectrum of SiNC-VDMCIS.
Fig. 3 shows an ATR-IR spectrum of SiNC-VTEOS.
Fig. 4 shows a photoluminescence spectrum of products obtained in Examples 1 and 2.
Fig. 5 shows a photoluminescence spectrum of SiNC-VTEOS with polysiloxane coating.
Fig. 6 shows polysiloxane sheets when irradiated with daylight (top panel) or UV light (lower panel).
Fig. 7 shows a gel consisting of SiNC-VTEOS when irradiated with UV light (left) and daylight (right).
Fig. 8 shows scanning electron micrographs of a SiNC-Sil network produced from SiNC-VTEOS.
Fig. 9 shows silica nanoparticles modified with SiNC-VTEOS when irradiated with UV light (left) or daylight (right).
Fig. 10 shows photoluminescence properties of silica nanoparticles modified with SiNC-VTEOS or unmodified.

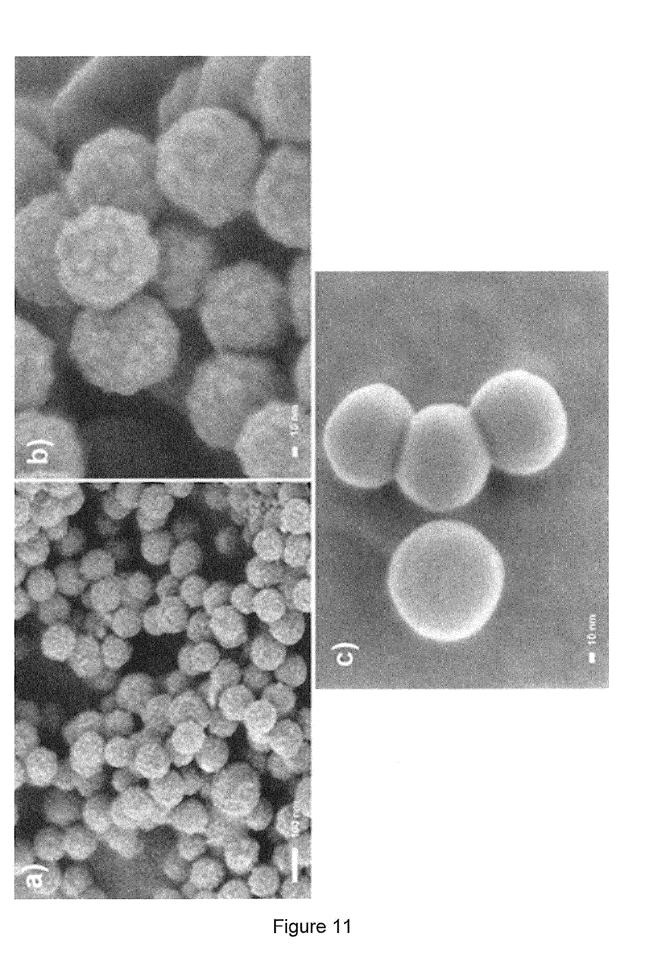

Fig. 11 shows scanning electron micrographs of silica particles, modified with SiNC-VTEOS (a, b) or unmodified (c).
Fig. 12 shows glass plates that are coated with SiNC-VDMCIS (left) or unmodified (right), when irradiated with daylight (top panel) or with UV light (lower panel).

### Example 1

### Preparation of functionalised silicon nanocrystals - SiNC-VDMMEOS and SiNC-VDMCIS

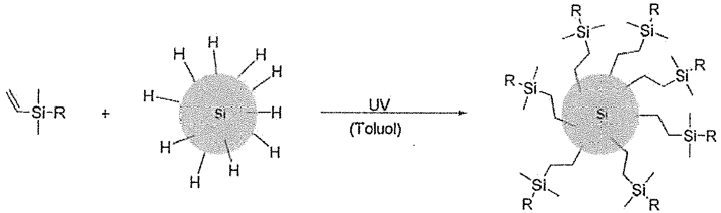

Photoluminescent silicon nanocrystal conjugates were prepared from silica as follows. To obtain silicon nanocrystals, amorphous silica matrix was crushed according to a method as described (C.M. Hessel, E.J. Henderson, J.G.C. Veinot, Chem. Mater. 2006, 18, 6139-6146) and the obtained particles were treated with HF. 400 mg of the obtained mixture were loaded into a teflon beaker and 12 mL of a mixture of EtOH, water, and HF (49% in H₂O) 1:1:1 (parts per volume) ,were added. The obtained silicon nanocrystals were extracted with 30 mL toluene. The mixture was centrifuged and washed with 10 mL toluene and again centrifuged. Thereafter, the silicon nanocrystals were taken up in 12 mL toluene and transferred to a heated out or baked out Schlenk flask. 5 mL vinyldimethylmethoxysilane (R = OCH₃) or vinyldimethylchlorosilane (R = Cl) were added and the mixture was freeze degassed three times. After three days of irradiation with 365 nm UV light, solvent and unreacted starting material were removed in vacuum and the product was taken up in 4 mL toluene. Non-reacted and oxidized silicon nanoparticles were removed as sediment by centrifugation. The solution was decanted and transferred in a heated Schlenk flask. Functionalised SiNCs were obtained - a first solution comprising SiNC with vinyl-dimethylmethoxysilane groups (SiNC-VDMMEOS) and a second solution comprising SiNC with vinyl-dimethylchlorosilane groups (SiNC-VDMCIS), each in toluene.

### Example 2

### Preparation of functionalised silicon nanocrystals - SiNC-VTEOS

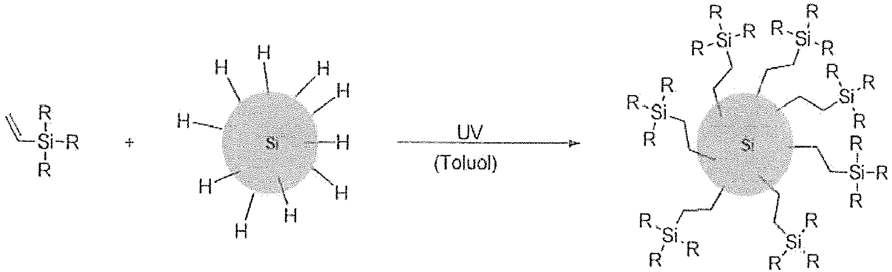

Functionalized SiNCs were prepared in general with the method as described in Example 1. Thus, amorphous silica matrix was crushed to yield a mixture of silicon particles which were treated with HF to yield silicon nanocrystals. 400 mg of the obtained mixture of nanoparticles were charged into a teflon beaker and 12 mL of a mixture of EtOH, water, and HF (49% in H₂O), 1:1:1 (parts per volume), were added. The nanocrystals were extracted with 30 mL toluene. After centrifugation and washing with 10 mL toluene and a second centrifugation, the silicon nanocrystals were taken up in 12 mL toluene and transferred to a heated out Schlenk flask. 5 mL vinyl-triethoxysilane (R = -OC₂H₅) were added and the mixture was freeze degassed three times. After three days of irradiation with 365 nm UV light, solvent and unreacted starting material were removed in vacuum and the product was taken up in 4 mL toluene or ethanol respectively. Sediment of non-reacted and oxidized silicon nanoparticles was removed by centrifugation. The solution was decanted and transferred to a baked out Schlenk flask. Functionalised SiNCs were obtained as solution of SiNC with vinyl-triethoxysilane groups (SiNC-VTEOS) in ethanol or toluene.

### Example 3

### Analytical data

### a) ATR-IR spectra

Samples of the products obtained in Examples 1 and 2 were subjected to ATR-IR and spectra were recorded for analysis of the obtained products. A sample was taken from a solution and dried in an argon stream on a diamond of an ATR device. Thereafter, an IR spectrum was recorded.

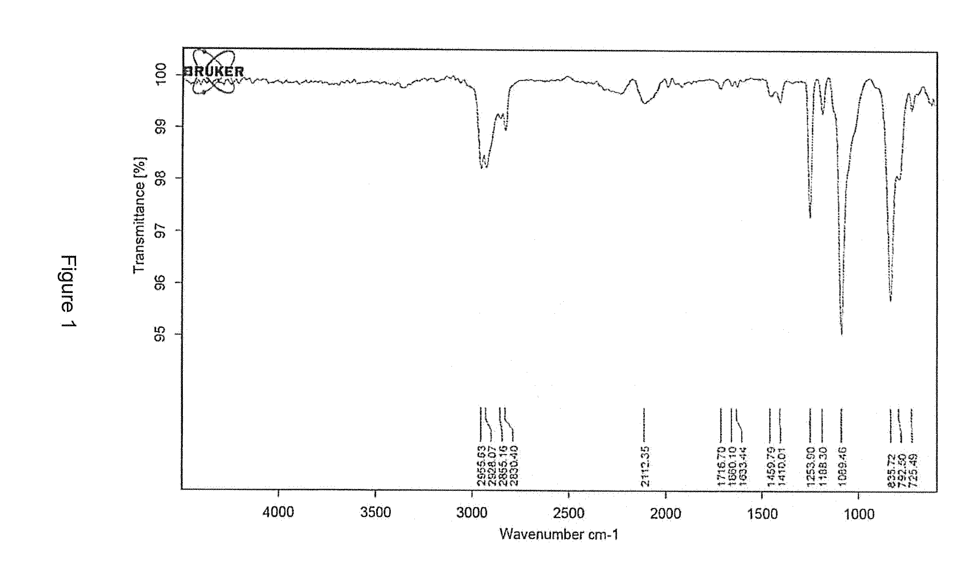

Figure 1 shows the ATR-IR spectrum of SiNC-VDMMEOS. CH-bond stretching absorption bands can be seen in the range of 2955 cm⁻¹ to 2830 cm⁻¹, in particular the CH-bond stretching absorption bands of OCH₃ and SiCH₃ groups as well as of an Si-CH₂-CH₂-Si bridge. The Si-CH₂-CH₂-Si bridge is also confirmed by a CH₂-bond bending absorption band at 1459 cm⁻¹. Asymmetric bond-bending absorption bands of the CH₃ groups on the silicon atom are found at 1410 cm⁻¹, and a symmetric bond-bending absorption band is seen at 1254 cm⁻¹. A sharp band at 1089 cm⁻¹ shows an asymmetric Si-O-C bond stretching absorption band of a methoxysilane residue. A band at 2112 cm⁻¹ corresponds to the Si-H bond stretching absorption band of SiNC.

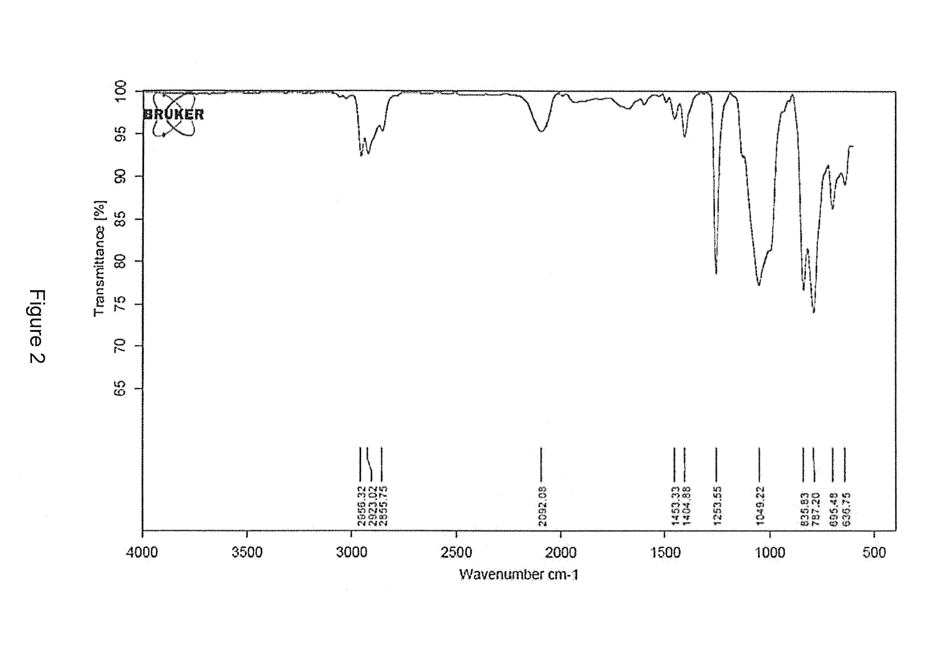

Fig. 2 shows the ATR-IR spectrum of SiNC-VDMCIS. Within the range of 2956cm⁻¹ to 2856 cm⁻¹ CH-bond stretching absorption bands of SiCH₃ groups and of the Si-CH₂-CH₂-Si bridge are present. The bridge is also confirmed by a bond-bending absorption band at 1453 cm⁻¹. The anti-symmetrical bond-bending absorption band of CH₃ groups bonded to a silicon atom is shown at 1404 cm⁻¹, whereas the symmetrical bond-bending absorbs at 1254 cm⁻¹. The band at 1049 cm⁻¹ shows silicon oxide that has been formed by fast hydrolysis of Si-Cl bonds. The band at 2092 cm⁻¹ corresponds to a Si-H bond stretching absorption band of SiNC.

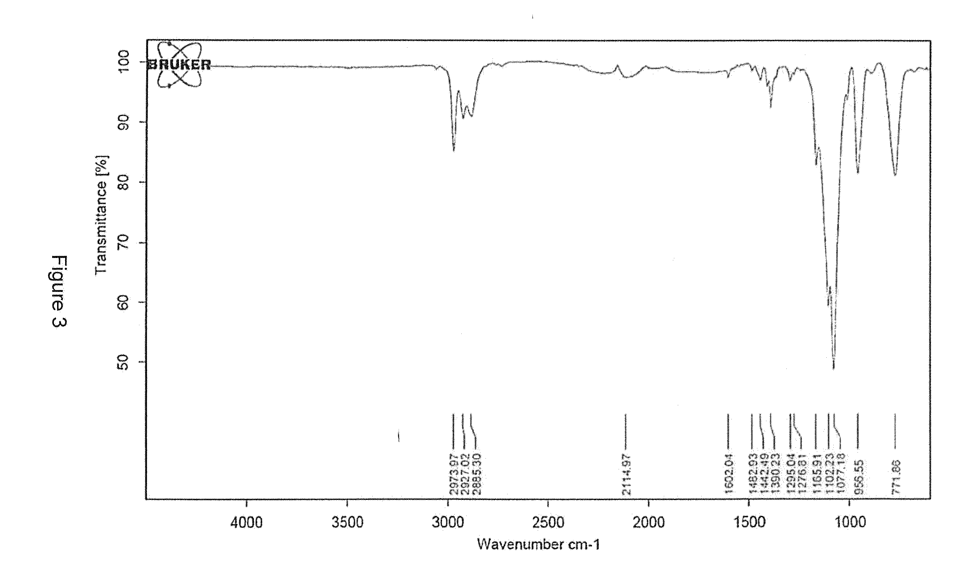

Fig. 3 shows the ATR-IR spectrum of SiNC-VTEOS. CH bond stretching absorption bands of O-CH₂-CH₃ and Si-CH₂-CH₂-Si within the range of 2974 cm⁻¹ to 2885 cm⁻¹ are shown. Si-CH₂-CH₂-Si is also confirmed by a CH₂ bond-bending absorption band at 1443 cm⁻¹. C-H bond-bending absorption bands of terminal O-CH₂-CH₃ groups are also shown in this range and are confirmed by asymmetrical Si-O bands at 1165 cm⁻¹, 1102 cm⁻¹, and 1077 cm⁻¹. The band at 2114 cm⁻¹ corresponds to a characteristic Si-H bond stretching absorption band of SiNC.

### b) Dynamic light scattering

The size of SiNCs obtained with the methods of Examples 1 and 2 was determined using dynamic light scattering (DLS). The results are shown in Table 1. SiNC-VDMMEOS and SiNC-VDMCIS were measured in toluene, whereas for the determination of SiNC-g-VTEOS ethanol was used. The nanoparticles carry groups on the surface that are prone to hydrolysis and can form aggregations and cross-linked structures during measurement (which is not done in vacuum or in the absence of air), therefore, regression fit was used for estimation. For multimodal samples only those structures having a size below 100 nm were analyzed. All products obtained in Examples 1 and 2 showed radiuses between about 4 and about 5 nm as can be seen in the following Table 1.

**Table 1 - DLS measurement of products of Examples 1 and 2**

| Compound | Radius/nm | Error/% |
|---|---|---|
| SiNC-VDMMEOS | 5.0 | 31.5 |
| SiNC-VDMCIS | 4.1 | 96.5 |
| SiNC-VTEOS | 5.2 | 43.5 |

### c) Photoluminescence

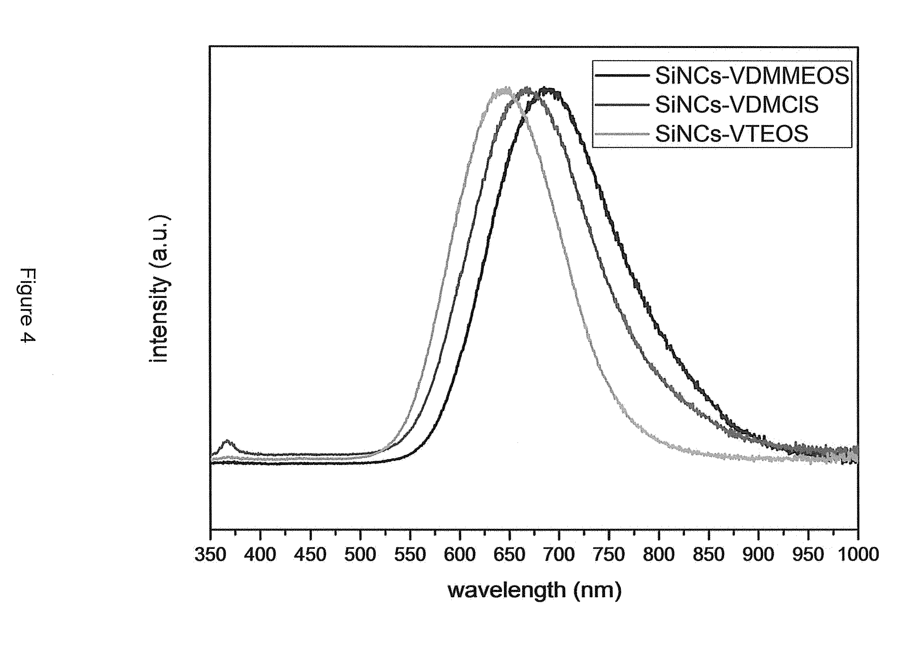

Photoluminescence spectra of the products of examples 1 and 2 were recorded. A sample was irradiated with UV light of 365 nm and the emission spectrum was measured and recorded in a 90° angle. Fig. 4 shows that emission maxima are in a wavelength range between 650 and 700 nm.

### Example 4

### Photoluminescent polysiloxane sheets

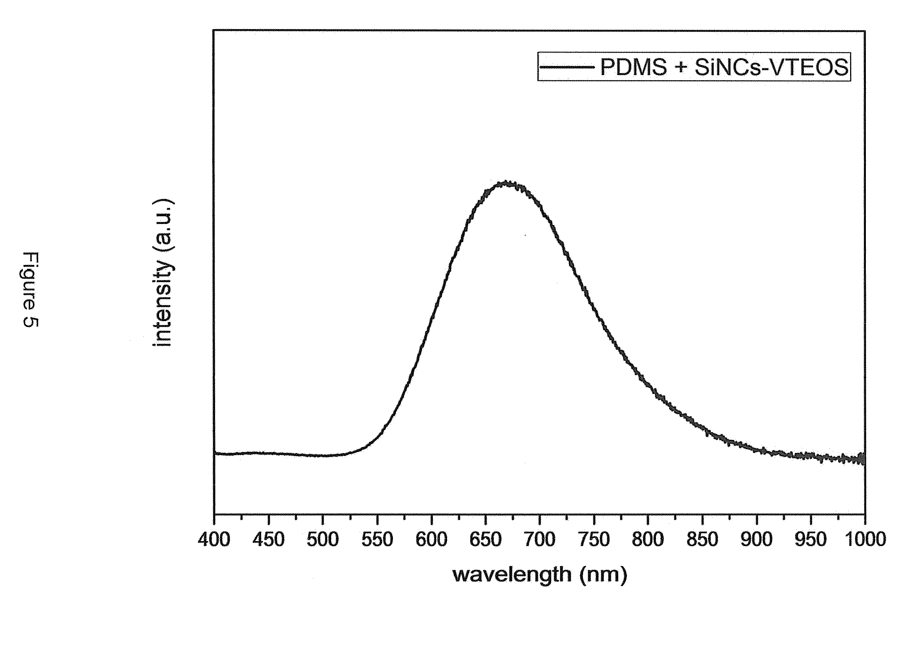

Polysiloxane sheets were coated with a photoluminescent layer by binding SiNC-VTEOS to polysiloxane via terminal hydroxy groups. A catalytic amount (10 µL; 0.1 mmol) of trifluoremethanesulfonic acid and one drop of water were added to a reaction mixture comprising 2 mL SiNC-VTEOS in toluene (see Example 2), 4 mL polysiloxane (0.8 to 0.9% OH; viscosity = 90 to 120 mPas) and 5 mL toluene. The mixture was stirred for 1 hour under reflux, cooled to room temperature and again stirred for 12 hours. The resulting product is photoluminescent and the maximum of photoluminescence is at 670 nm as can be seen in Fig. 5.

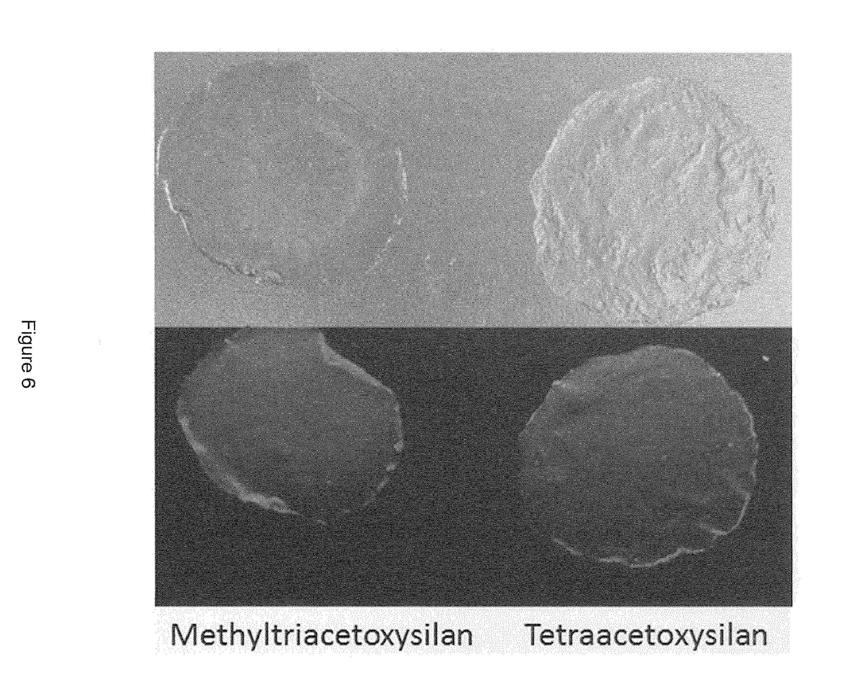

SiNC-VTEOS-functionalized polysiloxanes can be cross-linked by using different cross linkers, preferably tri- and tetrafunctional silanes. Using different cross-linkers allows to adapt elasticity and other properties of the polysiloxanes. Triacetoxymethyl and tetraacetoxysilane are particularly useful because they are commercially available and are easily hydrolyzed. A cross linker can be used dissolved in an organic solvent, like tetrahydrofuran. Cross linker solutions comprising about 0.01 to about 1 M cross linker are useful. In one example, a 0.1 M solution of a cross linker in tetrahydrofuran was used as cross-linking reagent. 0.5 mL of a cross-linker solution can be reacted with 2 mL of a solution of functionalized polysiloxanes such as SiNC-VTEOS polysiloxanes, dissolved in toluene. In one example, 0.5 mL of a cross-linking solution was reacted with 2 mL of SiNC-VTEOS-polysiloxane in toluene and the mixture was applied to a teflon surface. After 2 hours the film was removed and photoluminescence was determined. Fig. 6 shows that the polysiloxane obtained had photoluminescence.

### Example 5

### Functionalized silica gel

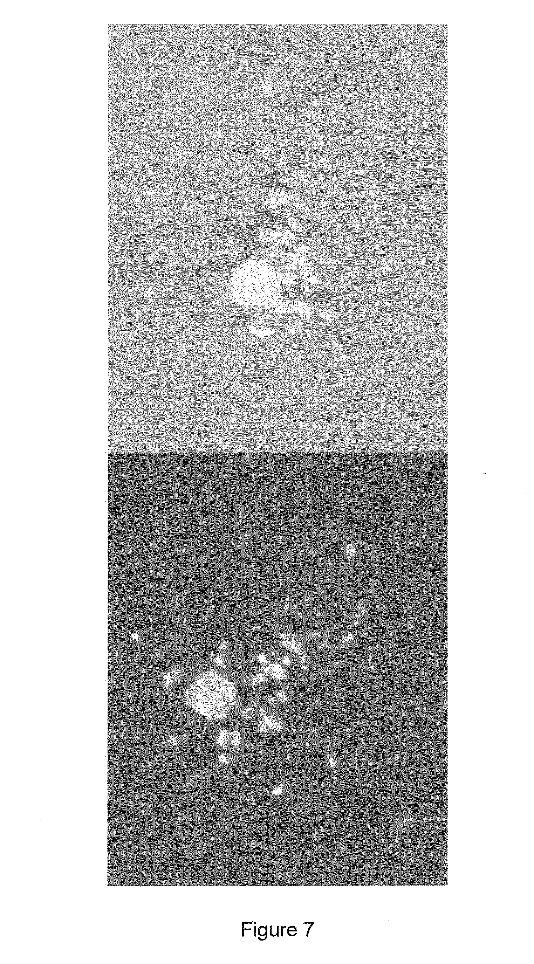

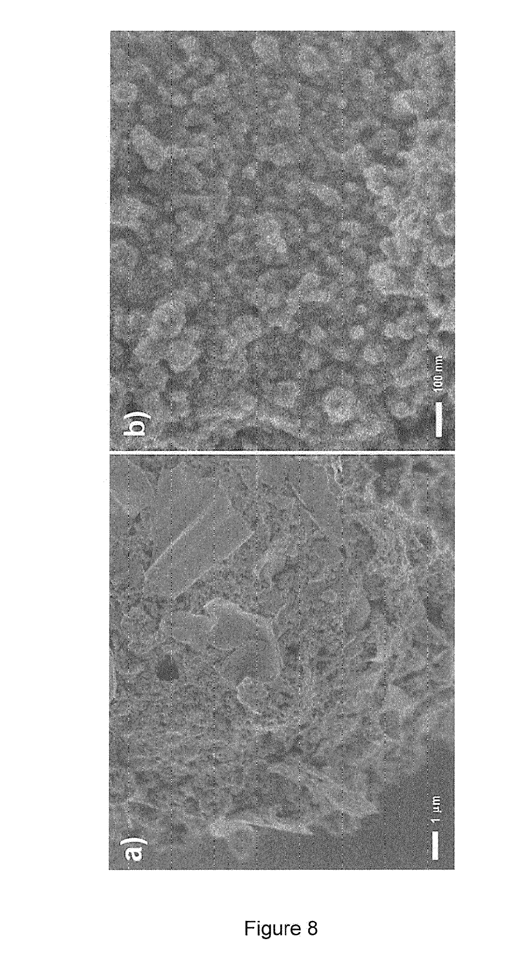

A reactor is charged with 1.5 mL water and 12 µL hydrochloric acid (2 M) and heated to 60°C. 1.5 mL of a solution of SiNC-VTEOS in ethanol, as obtained in Example 2, was added. The temperature was maintained at 60°C for 1 hour and afterwards the particles were separated by centrifugation and were maintained at 60°C for 2 days in the centrifuge tube. The supernatant was poured off and the product was impregnated in ethanol overnight. The ethanolic phase was poured off and the residue was dried at 70°C for 2 days. The SiNC-Sil-gel is obtained in the form of particulate material. Fig. 7 shows that the particulate material has photoluminescence. Scanning electron micrographs show paticles having a smooth surface (Fig. 8a) and nanoporous structures inside the SiNC-Sil-gel (Fig. 8b).

### Example 6

### Functionalized silica particles

Silica nanoparticles were coated with functionalized SiNCs (SiNC-Sil). Silica particle precursors were synthesized with a method known in the art (W. Stöber, A. Fink, J. Colloid Interface Sci. 1968, 69, 62-69). The precursors were obtained as particles having a hydrodynamic radius of 81 ± 33 nm (measured with DLS) as ethanolic dispersion. 1.0 mL of the said dispersion of silica particles in ethanol was mixed with 2 mL of a 5 mM solution of arginine in water and the mixture was heated to 60°C. 1 mL SiNC-VTEOS dissolved in ethanol was added and the mixture was stirred for 20 hours. The reacted particles were diluted with ethanol and centrifuged. After washing three times with ethanol, the final dispersion was diluted with 1 mL ethanol.

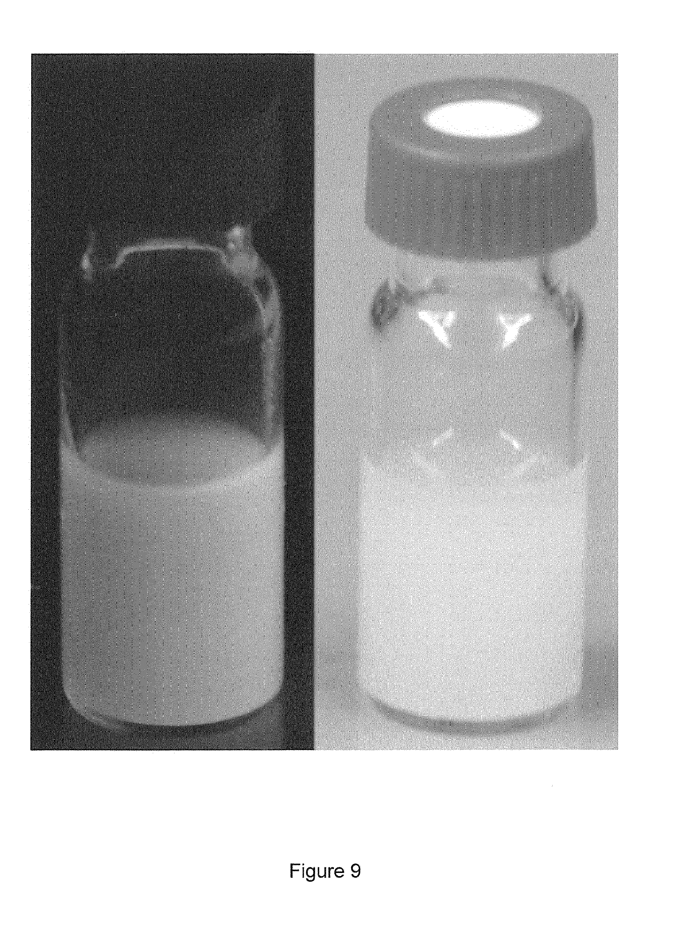

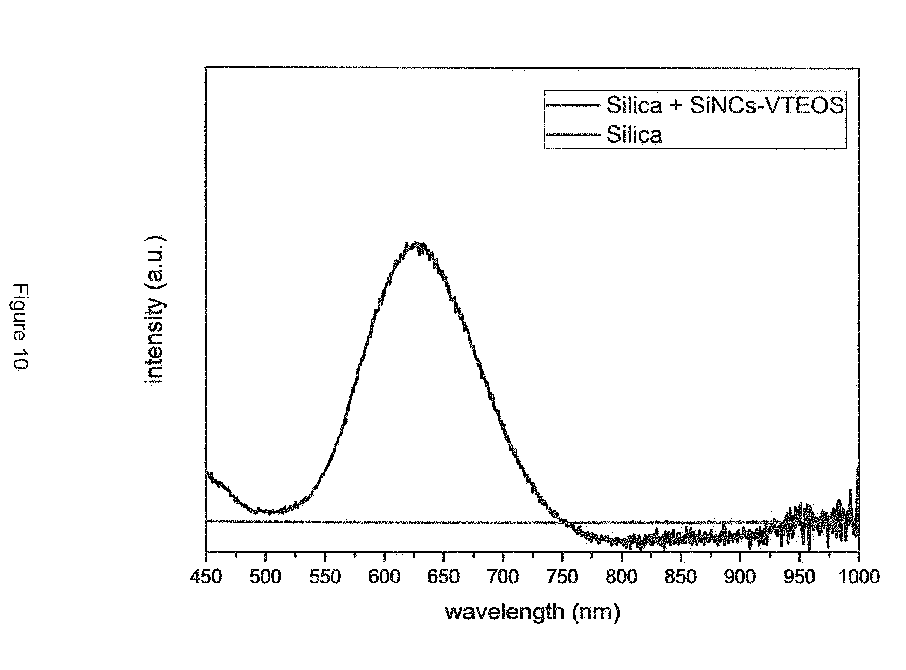

The particles obtained after modification with SiNC-VTEOS show photoluminescence which is visible to the naked eye as can be seen in Fig. 9. Photoluminescence was measured and the results are shown Fig. 10. Figs. 10a, b, and c show scanning electron micrographs of the surface of silica particles that have been coated with SiNC-VTEOS. Fig. 10a and b show the coated particles, whereas Fig. 10c shows the smooth surface of unmodified silica particles. On average the particles have a size of 135 ± 132 nm.

### Example 7

### Functionalized glass

A glass plate (1.0 x 1.5 cm) was cleaned by treating it in an ultrasonic bath with water and detergents and was washed with distilled water and dried in N₂ stream. The glass substrate thereafter was cleaned with a mixture of H₂O₂ and H₂SO₄ (conc.) 1:3 for 1 hour, washed with distilled water and dried using N₂ flow and was then heated to 130°C for 30 minutes for drying. The cleaned glass surface was reacted with 3 mL SiNC-VDMCIS solution, as obtained in Example 1, for 24 hours. The substrate was removed and washed with toluene and dichloromethane. Thereafter, it was treated in an ultrasonic bath with toluene for 10 minutes.

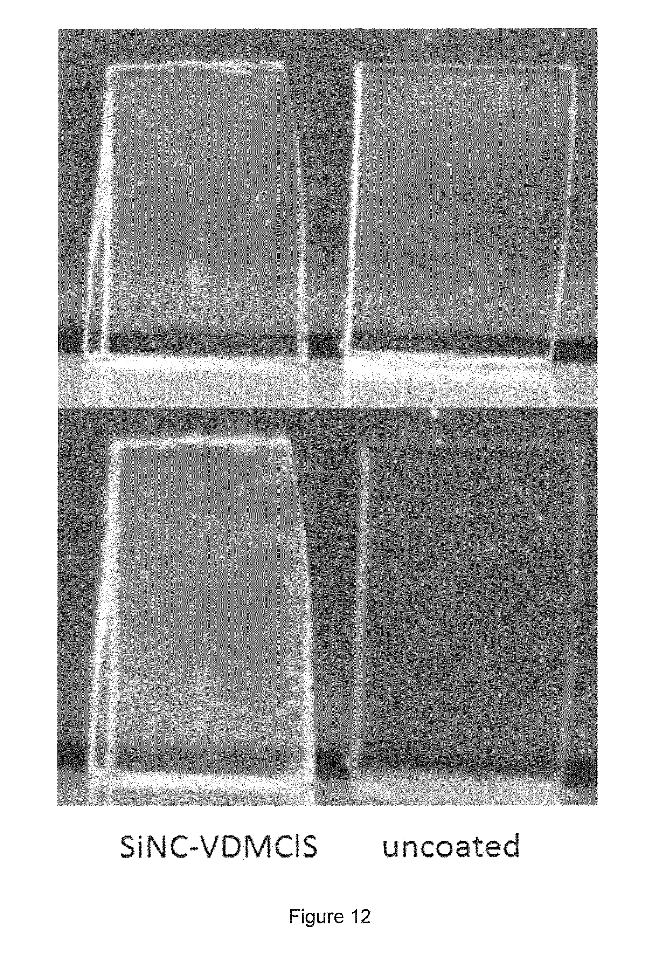

The obtained glass showed a characteristic red photoluminescence under UV irradiation (365 nm) which was caused by the SiNC. Fig. 12 shows glass coated with SiNC-VDMCIS compared to untreated glass. In the upper panel the glass is shown under daylight and in the lower panel the glass is shown under UV irradiation of 365 nm.

## Claims

1. Silicon nanocrystal conjugate of formula (I)
SiNC-(L-(SiXₐY_{b}Z_{c}))ₙ
wherein SiNC is a silicon nanocrystal,
L is a linker having a length of 2 to 50 atoms,
X is a reactive and/or hydrolysable group,
Y is an organic group,
Z is -R¹R²C=CR³R⁴, -R¹C≡CR⁵ or -R¹R⁶₂C-CR⁷₂-SiNC, wherein R¹ is a bond or alkyl having 1 to 50 carbon atoms, and R², R³, R⁴, R⁵, R⁶, R⁷ each are independently hydrogen, alkyl having 1 to 12 carbon atoms, or SiNC,
a is an integer of 0 to 3, b is an integer of 0 to 3, c is an integer of 0 to 3, a + b + c is 3, and n is an integer of 1 or more.

2. Silicon nanocrystal conjugate according to claim 1, wherein X is halogen, C₁-C₂₀-organoxy or C₁-C₂₀-acyloxy and/or wherein Y is alkyl having 1 to 50 carbon atoms or aryl having 6 to 50 carbon atoms and/or wherein the linker is saturated or unsatured, linear or branched C₂-C₁₂ alkyl.

3. Silicon nanocrystal conjugate according to claim 1 or claim 2 wherein X is methoxy, ethoxy or acetoxy and/or Y is C₁-C₁₂ alkyl or C₆-C₁₀ aryl and/or wherein the linker is ethylene, ethenylene, n-propylene, or n-butylene.

4. Silicon nanocrystal conjugate according to one of the preceding claims wherein the silicon nanocrystal has an average diameter of 1 to 1000 nm.

5. Method for preparing a silicon nanocrystal conjugate wherein a silicon nanocrystal having at least one terminal hydride at the surface is reacted with at least one silane of formula (II) SiXₐY_{b}Z'_{c} wherein X is a reactive and/or hydrolysable group, Y is an organic group, Z' is -R¹R²C=CR³R⁴, -R¹C≡CR⁵ or -R¹R⁶₂C-CR⁷₂-SiNC, wherein R¹ is a bond or alkyl having 1 to 50 carbon atoms, and R², R³, R⁴, R⁵, R⁶, R⁷ each are independently hydrogen, alkyl having 1 to 12 carbon atoms, or SiNC, and a is an integer of 0 to 3, b is an integer of 0 to 3, c is an integer of 1 to 3 and a + b + c is 4, under free radical addition favoring conditions or by an exciton mediated mechanism.

6. Method according to claim 5, wherein free radical addition favoring conditions are UV light, catalyst, radical starter molecules or a combination thereof.

7. Method according to one of claims 5 or 6 wherein the silicon nanocrystal has been obtained by pyrolysis of hydrogen silsesquioxane and/or wherein the silicon nanocrystal has been obtained by etching silicon nanoparticles with hydrogen halogenide.

8. Method according to one of claims 5 to 7 wherein the silicon nanocrystal conjugate is a conjugate wherein at least one X is alkoxy and wherein the silicon nanocrystal conjugates are further reacted with a cross-linking agent.

9. Method according to one of claims 5 to 8 wherein the cross-linking agent is a silane having at least two carboxy groups.

10. Method for producing photoluminescent polysiloxane wherein polysiloxane having terminal hydroxyl groups is reacted with at least one silicon nanocrystal conjugate of one of claims 1 to 4 in the presence of a catalyst.

11. Method for preparing photoluminescent silicon nanocrystal gel wherein silicon nanocrystal conjugates comprising at least one alkoxy group dissolved in a solvent are reacted with an acidic reagent under conditions that allow cross-linking of the hydrolyzed groups.

12. Method for preparing photoluminescent silica particles wherein silica particles having an average diameter of 50 to 150 nm solubilized in a solvent are reacted with silicon crystal conjugates of one of claims 1 to 4 carrying at least one alkoxy group on the surface.

13. Method for preparing photoluminescent glass wherein a glass surface is reacted with acid and a silicon crystal conjugate according to one of claims 1 to 4 carrying at least one hydrolysable group X under conditions that allow reaction between hydroxy groups on the glass surface with hydrolyzed silicon nanocrystal conjugates.

14. Use of a silicon nanocrystal conjugate of one of claims 1 to 4 for preparing silicon containing substrates with a photo luminescent layer, wherein optionally the photo luminescent layer covers the whole substrate or a part thereof.

15. Use of claim 14 wherein the silicon containing substrate with a photo luminescent layer is a glass plate, with a photo luminescent layer on at least part of one surface, a polysiloxane sheet, that comprises at least partially a photo luminescent layer, a gel of silicon nanocrystal conjugates that have been crosslinked, or silicon containing microparticles that are fully or partially covered by photo luminescent layer
